# EUROPÄISCHE PATENTSCHRIFT

(11) **EP 0 889 815 B1**
(45) Veröffentlichungstag und Bekanntmachung des Hinweises auf die Patenterteilung: **05.07.2000**
(21) Anmeldenummer: 97948717.0
(22) Anmeldetag: 06.11.1997
(51) Int. Cl.: B60T 8/32

(54) **HYDRAULISCHE FAHRZEUGBREMSANLAGE**
HYDRAULIC BRAKE SYSTEM
SYSTEME DE FREINAGE HYDRAULIQUE

(30) Priorität: 15.01.1997 DE 19701070
(43) Veröffentlichungstag der Anmeldung: 13.01.1999
(73) Patentinhaber: ROBERT BOSCH GMBH, 70442 Stuttgart (DE)
(72) Erfinder: HOFMANN, Dirk, D-71636 Ludwigsburg (DE); BINDER, Jürgen, D-70599 Stuttgart (DE); PFAU, Martin, D-71287 Weissach (DE); SCHUNCK, Eberhardt, D-76829 Landau (DE)
(86) Internationale Anmeldenummer: DE9702567
(87) Internationale Veröffentlichungsnummer: WO9831576

(56) Entgegenhaltungen:
- WO-A-95/23083
- WO-A-96/03300
- DE-A- 3 124 755
- DE-A- 3 247 497
- DE-A- 4 314 448
- DE-A- 4 343 386
- DE-A- 4 431 474
- DE-C- 19 523 108

## Beschreibung

### Stand der Technik

Die Erfindung betrifft eine hydraulische Fahrzeugbremsanlage mit einer Fremdkraft-Betriebsanlage und einer Muskelkraft-Hilfsbremsanlage nach der Gattung des Hauptanspruchs.

Durch das Dokument DE 31 24 755 A ist eine mit Fremdkraft oder mit Muskelkraft betreibbare hydraulische Fahrzeugbremsanlage bekannt. Diese hydraulische Fahrzeugbremsanlage hat einen per Bremspedal betätigbaren Hauptbremszylinder, von dem durch ein Trennventil mindestens ein Radbremszylinder versorgbar ist. Desweiteren hat die hydraulische Fahrzeugbremsanlage zwecks Bremsens mit Fremdenergie eine Hydropumpe, die sich aus einem eigenen Reservoir versorgt, einen an die Druckseite der Pumpe angeschlossenen Hochdruck-Hydrospeicher und zwischen diesem und wenigstens einer Radbremse und dem Reservoir eine Ventilanordnung zum Bremsdruckaufbauen und Bremsdruckabsenken, einen an den Hauptbremszylinder angeschlossenen Wegsimulator, bestehend aus einem Zylinder, einem in diesem abgedichtet verschiebbaren Kolben und einer gegen den Kolben wirkenden Wegsimulatorfeder, ein elektrisches Steuergerät, das an einem Hauptbremszylinderdrucksensor und einem Radbremszylinderdrucksensor angeschlossen ist und bei Betriebstüchtigkeit des elektrischen Steuergeräts, der Ventile und der Pumpe in Abhängigkeit von der Betätigung des Hauptbremszylinders das Trennventil zwischen dem Hauptbremszylinder und der Ventilanordnung schließt und durch Betätigen der Ventilanordnung je nach Größe des Signals aus dem Hauptbremszylinderdrucksensor den, mittels des Radbremszylinderdrucksensors meßbaren Radbremszylinderdruck einregelt. Eine bauliche Ausbildung der Wegsimulatorfeder bestimmt, in welcher Weise eine Pedalkraft als Folge eines Pedalweges zunimmt. Je nach Ausbildung der Simulatorfeder, beispielsweise in Form einer Kegelfeder, nimmt die Pedalkraft über dem Pedalweg zunächst wenig und dann zunehmend kräftiger zu. Eine einmal baulich ausgebildete Wegsimulatorfeder bestimmt nach ihrem Einbau ein für allemal den Zusammenhang zwischen Bremspedalweg und einer hierbei beispielsweise progressiv ansteigenden Pedalkraft. Anstelle der beiden Drucksensoren ist auch eine Sensorik verwendbar, die Signale für Druckunterschiede zwischen dem Hauptbremszylinder und dem Radbremszylinderdruck abgibt. Dann erhält das Steuergerät gleich den Unterschiedsbetrag gemeldet, den es durch Steuern der Ventilanordnung zu verkleinern gilt. Dabei ist die Ventilanordnung derart ausgebildet, daß das die Pumpe versorgende Reservoir nur mit dem wenigstens einen Radbremszylinder verbindbar ist. Deshalb ist der Füllstand des Reservoirs unabhängig vom Füllstand eines Vorratsbehälters des Hauptbremszylinders zu überwachen und ggf. zu korrigieren. Demgemäß ist dem Reservoir ein Einfüllstutzen und ein Einfüllstutzenverschluß zuzuordnen. Diese hydraulische Fahrzeugbremsanlage ist auch eingerichtet zum Vermindern oder Beseitigen von Radblockiergefahr per Betätigung der Ventilanordnung ausgehend von Signalen aus wenigstens einem Raddrehungssensor.

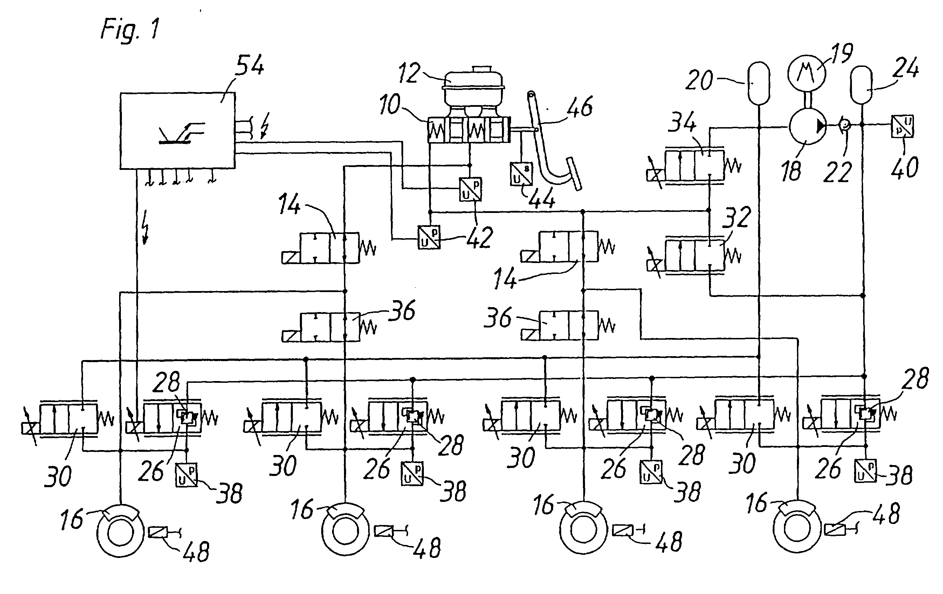

Eine durch das Dokument DE 44 31 474 A (Figur 1) bekannte hydraulische Fahrzeugbremsanlage enthält einen Hauptbremszylinder zum Versorgen von Radbremszylindern, ein Bremspedal zum Betätigen des Hauptbremszylinders und dem Hauptbremszylinder zugeordnet einen mittels des Bremspedals steuerbaren pneumatischen Bremskraftverstärker und ist durch Anordnung von elektrisch steuerbaren Ventilen, einer Pumpe je Bremskreis und einem Niederdruckspeicher vor der jeweiligen Pumpe eingerichtet zur automatischen Bremsschlupfregelung. Hierbei wird mittels der steuerbaren Ventile ein Zulauf von Druckmittel aus dem Hauptbremszylinder zur jeweiligen Radbremse bedienungsabhängig unterbrochen und Druckmittel der Radbremse zur Niederdruckspeicher und der Pumpe ausgelassen, wodurch diese Pumpe das ausgelassene Druckmittel in den Hauptbremszylinder zurückpumpt. Insoweit liegt eine Standardbremsanlage vor, bei der die Volumenaufnahme von Radbremszylindern über den Weg des Bremspedals erkennbar ist. Auch während einer Bremsschlupfregelung ist bei ausreichend lang eingeschalteter Pumpe über das gegen den Fahrer bewegte Bremspedal erkennbar, daß der Inhalt der wenigstens einen Radbremse vermindert wurde. Diese hydraulische Fahrzeugbremsanlage ist desweiteren weitergebildet zum automatischen Bremsen zwecks Antriebsschlupfregelung, Fahrstabilitätsregelung oder/und Fahrzeugverzögerungsregelung. Damit in einem solchen Regelungsbetrieb in wenigstens einer Radbremse Radbremsdruck zügig ansteigen kann, ist ausgangsseitig einer jeden Pumpe ein von dieser aufladbarer Hochdruckspeicher vorgesehen. Zusätzlich ist noch in jeder Hauptbremsleitung ein Trennventil vorgesehen und desweiteren einem jedem Hochdruckspeicher nachgeordnet ein elektromagnetisch steuerbares Ventil, mittels dem Druckmittel aus dem Hochdruckspeicher unter Druck unterhalb des jeweiligen Trennventils vor die Ventile, die der Bremsschlupfregelung dienen, leitbar ist, damit mittels dieser Ventile Druckmittel in Radbremszylinder einleitbar ist.

Durch das Dokument DE 195 23 108 C ist eine weitere mit Fremdenergie oder mit Muskelkraft betreibbare hydraulische Fahrzeugbremsanlage bekannt, die zum Betrieb mit Muskelkraft einen Hauptbremszylinder und zum Betrieb mit Fremdenergie je Bremskreis wenigstens eine Pumpe aufweist, deren Ausgang mit einem oder mit zwei Radbremsen permanent verbunden ist, wobei die jeweilige Pumpe sich aus einem eigenen Niederdruckspeicher versorgt, der durch ein offen stehendes elektrisch steuerbares Ventil mit einer Bremsleitung und dadurch auch durch ein in die Bremsleitung eingebautes Trennventil mit dem Hauptbremszylinder kommuniziert. Ein in dem Dokument 31 24 755 A dem Ausgang der Pumpe nachgeordneter Hochdruckspeicher und eine Ventilanordnung zwischen diesem und der wenigstens einen Radbremse sind hier nicht vorhanden. Der dem Eingang der Pumpe zugeordnete Niederdruckspeicher ist als ein Membranspeicher symbolisiert innerhalb eines der Bremskreise, wogegen innerhalb des anderen der beiden Bremskreise gemäß der Figur 1 ein Reservoir vorgesehen ist. Jedoch kann anstelle eines solchen Reservoirs auch ein Speicher, bestehend aus einem Zylinder, einem Kolben und einer Kolbenfeder, angeordnet sein. In ein Gehäuse des Hauptbremszylinders integriert ist ein Wegsimulator, in dem eine als eine Schraubenfeder ausgebildete Simulatorfeder eingebaut ist. Der Wegsimulator ist wirksam, wenn für den Bremsbetrieb mit Fremdenergie das wenigstens eine unterhalb des Hauptbremszylinders befindliche Trennventil geschlossen ist. Hierbei wird eine Pedalkraft-Pedalweg-Charakteristik bestimmt durch die Abmessungen der Schraubenfeder. An den Hauptbremszylinder angeschlossen ist ein Drucksensor. Mit dem Bremspedal verkuppelt ist ein Sensor, der den Schwenkwinkel des Bremspedals bzw. mittelbar den Weg der Trittplatte erfaßt. Beide Sensoren sind mit einem Steuergerät verbunden, das zum Steuern der Trennventile in die Schließstellungen und zum bedingungsabhängigen Einschalten der Pumpen dient.

Eine weitere, die Gattung bildende Fahrzeugbremsanlage ist bekannt aus dem SAE-paper 96 0991. Die bekannte Fahrzeugbremsanlage weist einen Hauptbremszylinder auf, an den unter Zwischenschaltung wenigstens eines Trennventils Radbremszylinder angeschlossen sind. Desweiteren weist die bekannte Fahrzeugbremsanlage eine Hydropumpe auf, die Bremsflüssigkeit aus einem Vorratsbehälter ansaugt und in einen Hochdruck-Hydrospeicher fördert. Der Hochdruck-Hydrospeicher bildet einen Fremdenerigespeicher, die Hydropumpe zusammen mit dem Hochdruck-hydrospeicher eine Fremdenergiequelle. Über Bremsdruckaufbauventile sind die Radbremszylinder an den Hochdruck-Hydrospeicher bzw. an die Druckseite der Hydropumpe angeschlossen. Über jeweils den Radbremszylindern nachgeschaltete Bremsdruckabsenkventile sind die Radbremszylinder mit dem Vorratsbehälter verbindbar.

Zur Fremdkraftbremsung wird das wenigstens eine Trennventil geschlossen und es werden die Bremsdruckaufbauventile geöffnet, so daß unter Druck stehende Bremsflüssigkeit aus dem Hochdruck-Hydrospeicher in die Radbremszylinder strömt. In den Radbremsyzlindern gewollte Radbremsdrücke und damit erzeugte Bremsmomente lassen sich mittels der Bremsdruckaufbauventile und der Bremsdruckabsenkventile in an sich bekannter Weise einstellen und verändern. Der Hauptbremszylinder, der während der Fremdkraftbremsung durch das geschlossene, wenigstens eine Trennventil von den Radbremszylindern hydraulisch getrennt ist, dient dadurch ausschließlich als Bremsmoment-Sollwertgeber, von dessen Betätigung abhängig der Radbremsdruck eingestellt wird. Damit während einer Fremdkraft-Bremsung trotz geschlossenem Trennventil ein auf den Hauptbremszylinder wirkendes Bremspedal in allgemein erwarteter Weise gegen einen ansteigenden Widerstand bewegbar ist, ist in einer durch das Dokument DE 31 24 755 A bekannten Weise an den Hauptbremszylinder ein Wegsimulator angeschlossen. Dieser über ein Ventil angeschlossen und weist einen in einem Zylinder beweglichen Kolben auf, der mittels einer Wegsimulatorfeder belastet ist. An den Hauptbremszylinder ist ein Drucksensor zum Messen per Betätigung des Bremspedals erzeugten Drucks angeschlossen. Zusätzlich ist aber auch noch ein Sensor zum Messen von Bremspedalweg vorhanden. Insoweit sind redundante Sensoren vorgesehen, die eine Betätigung des Hauptbremszylinders anzeigen und jeweils einen Sollwert liefern, gemäß dem ein Steuergerät das Trennventil schließt und über Bremsdruckaufbauventile für Bremsdruckanstieg in Radbremszylindern sorgt, wobei der Bremsdruckanstieg in Form eines Istwertes dem Steuergerät gemeldet wird. Solange der Bremspedalweg noch kurz ist, werden Signale aus dem Bremspedalwegsensor als Sollwert bevorzugt, wogegen bei länger gewordenem Bremspedalweg Signale aus dem Drucksensor als Sollwert verarbeitet werden. Auch hier kann man als nachteilig ansehen, daß nach einer Auswahl der Abmessungen der Wegsimulatorfeder und deren Einbau eine dadurch bewirkte Pedalkraft-Pedalweg-Charakteristik unveränderbar bestimmt ist. Andererseits gibt das Dokument SAE-paper 960991 anhand der Figur 3 unterschiedliche Pedalkraft-Pedalweg-Charakteristiken von Fahrzeugen im Stand der Technik und auch Vorschläge für Pedalkraft-Pedalweg-Charakteristiken an. In der Praxis ist es nun so, daß in unterschiedlichen Fahrzeugfabriken unterschiedlich aus einem durch die in der Figur 3 abgesteckten Bereich von Pedalkraft-Pedalweg-Charakteristiken unvorhersagbar ausgewählt wird. Insoweit hat der Lieferant für die Wegsimulatorfedern unterschiedliche Wegsimulatorfedern herzustellen und zu liefern.

Zur Hilfsbremsung z.B. bei Ausfall der Fremdenergiequelle kann beispielsweise durch selbsttätiges Öffnen des Trennventils und Zurückfallen der Bremsdruckaufbauventile und der Bremsdruckabsenkventile in ihre Schließstellung in herkömmlicher Weise mittels des Hauptbremszylinders gebremst werden.

### Vorteile der Erfindung

Die erfindungsgemäße hydraulische Fahrzeugbremsanlage mit den kennzeichnenden Merkmalen des unabhängigen Anspruchs hat den Vorteil, daß auf eine konstruktive Ausgestaltung einer Simulatorfeder verzichtet werden kann durch Benutzung der Pedalwegventile, die in einer dem Steuergerät vorgebbarer Weise derart gesteuert werden, daß nach Art eines Regelvorgangs eine gewollte Pedalkraft-Pedalweg-Charakteristik zustande kommt. Weil anstelle einer bestimmten Pedalkraft-Pedalweg-Charakteristik leicht eine Abwandlung und damit weitere Charakteristiken möglich sind, kann man beispielsweise unterschiedliche Charakteristiken festlegen und es dem Fahrzeugbauer oder gar einem Fahrzeugbenützer überlassen, aus den Pedalkraft-Pedalweg-Charakteristiken auszuwählen.

Dank des Niederdruck-Hydrospeichers, aus dem die Hydropumpe Bremsflüssigkeit ansaugt und in den Bremsflüssigkeit aus den Radbremszylindern strömt, ist ein schneller Beginn des Absenkens des Radbremsdrucks möglich, wenn das Bremsdruckabsenkventil geöffnet wird. Durch die Verwendung des Niederdruck-Hydrospeichers kann auf einen Bremsflüssigkeits-Vorratsbehälter jedenfalls für die Fremdkraftbremsanlage verzichtet werden, die Hydropumpe ist nicht an einen Bremsflüssigkeitsvorratsbehälter des Hauptbremszylinders angeschlossen und während der Fremdkraftbremsung strömt keine Bremsflüssigkeit aus den Radbremszylindern in Richtung des Hauptbremszylinders oder in dessen Vorratsbehälter zurück. Die Fremdkraftbremsanlage bildet ein geschlossenes System, das eine hohe Sicherheit gegen Ausfall gewährleistet. Es sind keine hydraulischen Anschlüsse an den Vorratsbehälter des Hauptbremszylinders und keine Hydraulikleitungen als Ansaugleitung für die Hydropumpe und als Rückleitungen von den Radbremszylindern erforderlich. Dies hat zunächst den Vorteil, daß ein vorhandener Hauptbremszylinder mit aufgesetztem Bremsflüssigkeitsvorratsbehälter Verwendung finden kann, ohne daß Anschlüsse an dem Vorratsbehälter angebracht werden müssen. Weiterer Vorteil ist, daß derartige Anschlüsse und Hydraulikleitungen das Risiko von Undichtigkeiten mit sich bringen. Eine Undichtigkeit an einem dieser Anschlüsse des Vorratsbehälter oder der genannten Hydraulikleitungen hätte die fatale Folge, daß sie sich sowohl auf die Fremdkraftals auch auf die Muskelkraftbremsanlage auswirkt und die gesamte Fahrzeugbremsanlage außer Funktion setzt. Die Fahrzeugbremsanlage hat also den Vorteil, daß ihre Fremdkraft-Betriebsbremsanlage und ihre Muskelkraft-Hilfsbremsanlage redundant sind und damit einer erheblich gesteigerten Sicherheit gegen Ausfall.

Die Unteransprüche haben vorteilhafte Ausgestaltungen und Weiterbildungen der im Hauptanspruch angegebenen Erfindung zum Gegenstand.

Die kennzeichnenden Merkmale der Ansprüche 2 und 3 geben Auswahlmöglichkeiten für die Pedalwegventile an.

### Zeichnung

Die Erfindung wird nachfolgend anhand zweier Ausführungsbeispiele näher erläutert. Die beiden Figuren zeigen zwei Ausführungsbeispiele einer erfindungsgemäßen Fahrzeugbremsanlage.

### Beschreibung der Ausführungsbeispiele

Die in Figur 1 dargestellte, erfindungsgemäße Fahrzeugbremsanlage weist einen Tandem-Hauptbremszylinder 10 mit aufgesetztem Bremsflüssigkeits-Vorratsbehälter 12 auf, an den zwei Bremskreise angeschlossen sind. Dem Hauptbremszylinder 10 ist in jedem Bremskreis ein in seiner Grundstellung offenes Trennventil 14 nachgeschaltet, über das Radbremszylinder 16 an den Hauptbremszylinder 10 hydraulisch angeschlossen sind.

Desweiteren weist die in Figur 1 dargestelle, erfindungsgemäße Fahrzeugbremsanlage eine Hydropumpe 18 mit einem Pumpenmotor 19 auf, deren Saugseite an einen Niederdruck-Hydrospeicher 20 und an deren Druckseite unter Zwischenschaltung eines Rückschlagventils 22 ein Hochdruck-Hydrospeicher 24 angeschlossen ist. Die Radbremszylinder 16 sind über in ihrer Grundstellung geschlossene Bremsdruckaufbauventile 26, in die die Differenzdruckventile 28 integriert sind, an die Druckseite der Hydropumpe 18 und an den Hochdruck-Hydrospeicher 24 angeschlossen. Über den Radbremszylindern 16 nachgeschaltete, in ihrer Grundstellung geschlossene Bremsdruckabsenkventile 30 sind die Radbremszylinder 16 hydraulisch mit dem Niederdruck-Hydrospeicher 20 und der Saugseite der Hydropumpe 18 verbunden.

In einer von der Druckseite zur Saugseite der Hydropumpe 18 führenden Hydraulikleitung sind in Reihe zwei in ihrer Grundstellung geschlossene Pedalwegventile 32, 34 angeordnet, zwischen denen ein Verdrängungsraum des Hauptbremszylinders 10, im dargestellten Ausführungsbeispiel der Schwimmkolben-Verdrängungsraum, angeschlossen ist.

Im dargestellten Ausführungsbeispiel sind die Radbremszylinder 16 der Fahrzeugräder einer Fahrzeugachse gemeinsam an eine Verdrängungskammer des Tandem-Hauptbremszylinders 10, also an einen Bremskreis, angeschlossen, und zwar sind die Radbremszylinder 16 der Hinterräder an die Schwimmkolben-Verdrängungskammer angeschlossen, die, wie bereits ausgeführt, zusätzlich zwischen den Pedalventilen 32, 34 angeschlossen ist. In einer vom Trennventil 14 zu einem der Radbremszylinder 16 führende Bremsleitung ist ein in seiner Grundstellung offenes Ausgleichventil 36 angeordnet, über das die Radbremszylinder 16 der Fahrzeugräder einer Fahrzeugachse hydraulisch miteinander verbunden und durch Schließen des Ausgleichventils 36 voneinander trennbar sind.

Die Fahrzeugbremsanlage weist Raddrucksensoren 38 an jedem Radbremzylinder 16, einen Fremddrucksensor 40 am Hochdruck-Hydrospeicher 24, einen Drucksensor 42 für jede Verdrängungskammer des Hauptbremszylinders 10 und einen Pedalwegsensor 44 für ein Bremspedal 46 auf, mit dem der Hauptbremszylinder 10 betätigbar ist. Des weiteren sind Raddrehsensoren 48 an jedem Fahrzeugrad vorgesehen.

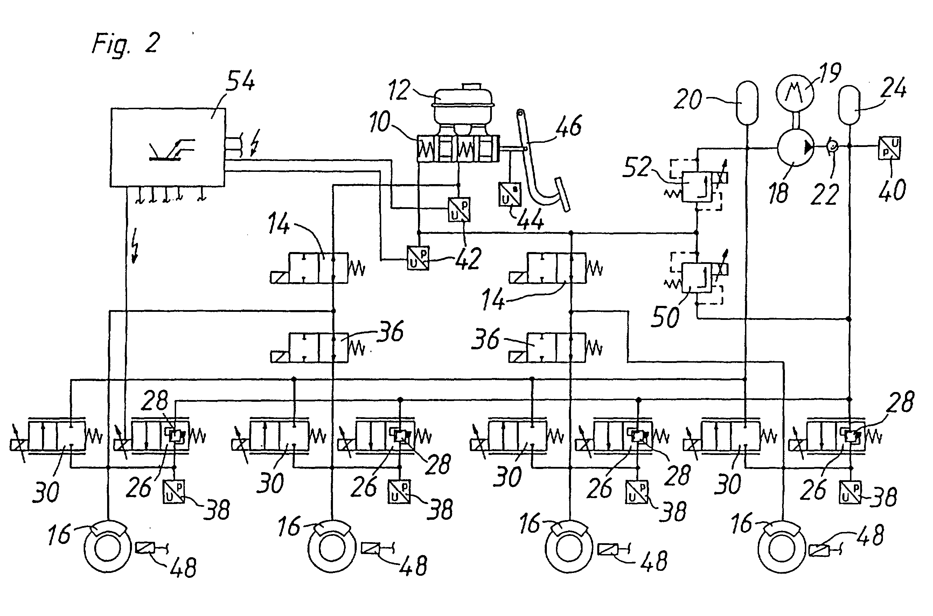

Sämtliche Ventile 14, 26, 30, 32, 34, 36 sind im dargestellten Ausführungsbeispiel als 2/2-Wegemagnetventile ausgebildet. Die Druckaufbau- und Druckabsenkventile 26, 30 können ebenso wie die Pedalwegventile 32, 34 durch ein 3/3-Wegemagnetventil ersetzt werden (nicht dargestellt). Die Bremsdruckaufbau- und Bremsdruckabsenkventile 26, 30 und die Pedalwegventile 32, 34 sind zur Verbesserung der Regelgüte als Proportionalventile ausgebildet. Die Pedalwegventile können auch, wie es in Figur 2 dargestellt ist, als Proportionaldruckventile 50, 52 ausgebildet sein. Im übrigen ist die in Figur 2 dargestellte, erfindungsgemäße Fahrzeugbremsanlage identisch mit der in Figur 1 dargestellte Fahrzeugbremsanlage aufgebaut und funktioniert in gleicher Weise. Hinsichtlich Figur 2 wird auf die entsprechenden Ausführungen zu Figur 1 verwiesen. Die Steuerung der Ventile 14, 26, 30, 32, 34, 36 und des Pumpenmotors 19 erfolgt mittels eines elektronischen Steuergeräts 54, das Signale von den Drucksensoren 38, 40, 42, dem Pedalwegsensor 44 und den Raddrehsensoren 48 erhält.

### Fremdkraftbremsung

Zur Fremdenergiebremsung werden die Trennventile 14 geschlossen, d. h. der Hauptbremzylinder 10 wird hydraulisch von den Radbremszylinder 16 getrennt. Der Hauptbremszylinder 10 dient für die Fremdkraftbremsung als Bremskraft-Sollwertgeber. Mit den an die Verdrängungskammern des Hauptbremszylinders 10 angeschlossenen Drucksensoren 42 wird der Druck in den Verdrängungskammern gemessen. Dieser Druck ist abhängig von der Kraft, mit der das Bremspedal 46 niedergetreten wird, diese beiden Drucksensoren 42 werden deswegen nachfolgend als Pedalkraftsensoren bezeichnet. Zur Fremdkraftbremsung wird das Signal eines der beiden Pedalkraftsensoren 42 herangezogen, der zweite Pedalkraftsensor 42 ist redundant zur Sicherheit vorgesehen, falls der eine Pedalkraftsensor 42 ausfällt.

Die Hydropumpe 18 und der Hochdruck-Hydrospeicher 24 bilden eine Fremdenergiequelle, der Hochdruck-Hydrospeicher 24 einen Fremdenergiespeicher, dessen Druck mit dem an ihn angeschlossenen Fremddrucksensor 40 gemessen wird. Zur Fremdkraft-bremsung wird Bremsflüssigkeit aus dem Hochdruck-Hydrospeicher 24 entnommen. Mit der Hydropumpe 18 wird der Hochdruck-Hydrospeicher 24 unter Druck gesetzt, wobei ein Nachladen von Zeit zu Zeit ausreicht, d. h. die Hydropumpe 18 ist nur zeitweise eingeschaltet.

Mit den Bremsdruckaufbau- und den Bremsdruckabsenkventilen 26, 30 wird ein Radbremsdruck in den Radbremszylindern 16 eingestellt, der von dem durch Niedertreten des Bremspedals 46 im Hauptbremszylinder 10 erzeugten Druck abhängig ist. Da jedem Radbremszylinder 16 ein Bremsdruckaufbau- und ein Bremsdruckabsenkventil 26, 30 zugeordnet ist, kann nach Schließen des Ausgleichventils 36 der Radbremsdruck radindividuell geregelt werden. Eine Schlupfregelung ist in an sich bekannter Weise durch Radbremsdruckmodulation mit den Bremsdruckaufbau- und Bremsdruckabsenkventilen 26, 30 möglich. Sofern keine radindividuelle Druckregelung stattfindet, kann der Radbremsdruck in mehreren Radbremszylindern 16, beispielsweise in Radbremszylindern 16 der Fahrzeugräder einer Fahrzeugachse, oder aller Radbremszylinder 16, mit einem Bremsdruckaufbau- und einem Bremsdruckabsenkventil 26, 30 gemeinsam geregelt werden.

Falls erforderlich, kann der Hochdruck-Hydrospeicher 24 mittels der Hydropumpe 18 aus dem Vorratsbehälter 12 des Hauptbremszylinders 10 durch öffnen des auf der Saugseite der Hydropumpe 18 angeordneten Pedalwegventils 34 nachgefüllt werden, wenn der Hauptbremszylinder 10 nicht betätigt ist. Ein Nachfüllen des Hochdruck-Hydrospeichers 24 kann erforderlich sein, wenn beispielsweise durch Wärmeausdehnung Bremsflüssigkeit aus dem Hochdruck-Hydrospeicher 24 in den Vorratsbehälter 12 gelangt ist.

Die beiden Pedalwegventile 32, 34 bilden zusammen mit den beiden Hydrospeichern 20, 24 und der Hydropumpe 18 einen aktiven Pedalwegsimulator für die Fremdkraftbremsung: Während der Fremdkraftbremsung sind die Trennventile 14 geschlossen, so daß keine Bremsflüssigkeit aus dem Hauptbremszylinder 10 in Richtung der Radbremszylinder 16 verdrängt werden kann. Um trotzdem einen Pedalweg zu erzielen, wird das auf der Saugseite der Hydropumpe 18 angeordnete Pedalwegventil 34 geöffnet, bis der gewünschte Pedalweg erreicht ist. Zum Rückstellen des Bremspedals 46 wird das auf der Druckseite der Hydropumpe 18 angeordnete Pedalwegventil 32 geöffnet, so daß Bremsflüssigkeit aus dem Hochdruck-Hydrospeicher 24 in den Hauptbremszylinder 10 fließt und diesen zusammen mit dem Bremspedal 46 zurückstellt.

Der Pedalweg, der mit dem Pedalwegsensor 44 gemessen wird, wird abhängig von dem im Hauptbremszylinder 10 erzeugten Druck eingestellt, der von der Kraft abhängig ist, mit der das Bremspedal 46 niedergetreten wird und der mit den Pedalkraftsensoren 42 meßbar ist. Auf diese Weise läßt sich jede gewünschte Pedalkraft/Weg-Kennlinie einstellen. Auch läßt sich die Pedalkraft/Weg-Kennlinie einfach dadurch ändern, daß ein Regelalgorhythmus, mit dem das elektronische Steuergerät 54 die Pedalwegventile 32, 34 steuert, geändert wird. Eine Änderung der hydraulischen Komponenten der Fahrzeugbremsanlage ist nicht notwendig. Dadurch ist es auf einfache Art möglich, die Fahrzeugbremsanlage an unterschiedliche Fahrzeuge anzupassen. Auch ist es denkbar, die Pedalkraft/Weg-Kennlinie dem Wunsch des jeweiligen Fahrers anzupassen.

Der aktive Pedalwegsimulator 18, 20, 24, 32, 34 kann auch mit Proportionaldruckventilen 50, 52 anstelle der Proportionalwegventile 32, 34 als Pedalwegventile verwirklicht sein, wie es in Figur 2 dargestellt ist.

### Hilfsbremsanlage

Bei Ausfall der Fremdkraftbremsanlage, d. h. der Betriebsanlage, läßt sich die erfindungsgemäße Fahrzeugbremsanlage als Hilfsbremsanlage per Muskelkraft betätigen: dazu verbleiben sämtliche Ventile 14, 26, 30, 32, 34, 36 in ihrer Grundstellung. Durch Niedertreten des Bremspedals 46 wird der Hauptbremszylinder 10 wie bei der Betriebsbremsung betätigt. Aus den Verdrängungskammern des Hauptbremszylinders 10 verdrängte Bremsflüssigkeit gelangt durch die offenen Trennventile 14 und die offenen Ausgleichventile 36 in alle Radbremszylinder 16. Die Realisierung des bei der Muskelkraftbremsung nicht wirksamen, aktiven Pedalwegsimulators mittels der beiden Pedalwegventile 32, 34 hat den Vorteil, daß er bei der Muskelkraftbremsung keine der aus dem Hauptbremszylinder 10 verdrängten Bremsflüssigkeit aufnimmt und den Pedalweg nicht verlängert, so daß kein Pedalweg verloren geht und die aus dem Hauptbremszylinder 10 verdrängte Bremsflüssigkeit ausschließlich den Radbremszylindern 16 zufließt. Das bedeutet, der Pedalweg wird bei der Muskelkraftbremsung voll genutzt.

Die Fahrzeugbremsanlage ist redundant ausgebildet und hat insbesondere den Vorteil einer großen Sicherheit gegen Ausfall. Bei Ausfall eines beliebigen, hydraulischen Bauteils der Fahrzeugbremsanlage läßt sich diese zumindest als Hilfsbremsanlage mit Muskelkraft betätigen.

## Patentansprüche

1. Hydraulische Fahrzeugbremsanlage mit einer Fremdkraft-Betriebsbremsanlage und einer Muskelkraft-Hilfsbremsanlage, mit einem Bremspedal (46) und mit einem mittels des Bremspedals (46) betätigbaren Hauptbremszylinder (10), an den über ein Trennventil (14) mindestens ein Radbremszylinder (16) angeschlossen ist, mit einer Hydropumpe (18), an deren Druckseite ein Hochdruck-Hydrospeicher (24) und über ein Bremsdruckaufbauventil (26) der mindestens eine Radbremszylinder (16) angeschlossen ist und mit einem Bremsdruckabsenkventil (30), das dem mindestens einen Radbremszylinder (16) nachgeschaltet ist, mit einem Steuergerät (54) zum Steuern des Trennventils (14), des Bremsdruckaufbauventils (26) und des Bremsdruckabsenkventils (30) in Abhängigkeit von einer Betätigung des Bremspedals (46), mit einem dem Bremspedal (46) wenigstens mittelbar zugeordneten Pedalwegsensor (44) und einem dem Bremspedal (46) wenigstens mittelbar zugeordneten Pedalkraftsensor (42), an die das Steuergerät (54) angeschlossen ist, und mit einer Einrichtung, die bei geschlossenem Trennventil (14) während eines Fremdkraftbetriebs eine vorgewählte Nachgiebigkeit des Bremspedals durch Öffnen einer elektrisch steuerbaren Ventileinrichtung ermöglicht, dadurch gekennzeichnet, daß die Fahrzeugbremsanlage einen Niederdruck-Hydrospeicher (20) aufweist, an den die Hydropumpe (18) mit ihrer Saugseite und an den der mindestens eine Radbremszylinder (16) über das Bremsdruckabsenkventil (30) angeschlossen sind, daß die elektrisch steuerbare Ventileinrichtung der Einrichtung für die Nachgiebigkeit des Bremspedals (46) ein erstes Pedalwegventil (32; 50) und zusätzlich ein zweites Pedalwegventil (34; 52) aufweist, wobei eines der Pedalwegventile (34; 52) zwischen dem Hauptbremszylinder (10) und der Saugseite der Hydropumpe (18) bzw. dem Niederdruck-Hydrospeicher (20) und wobei das andere der Pedalwegventile (32; 50) zwischen dem Hauptbremszylinder (10) und der Druckseite der Hydropumpe (18) bzw. dem Hochdruck-Hydrospeicher (24) angeordnet ist, und daß das Steuergerät (54) zum Steuern der zwei Pedalwegventile (32, 34; 50, 52) in Abhängigkeit von einer Betätigung des Bremspedals (46) eingerichtet ist.

2. Fahrzeugbremsanlage nach Anspruch 1, **dadurch gekennzeichnet,** daß die Pedalwegventile als Proportionalwegventile (32, 34) ausgebildet sind.

3. Fahrzeugbremsanlage nach Anspruch 1, **dadurch gekennzeichnet,** daß die Pedalwegventile als Proportionaldruckventile (50, 52) ausgebildet sind.

4. Fahrzeugbremsanlage nach Anspruch 1, **dadurch gekennzeichnet,** daß der Hauptbremszylinder (10) zwei voneinander unabhängige Pedalkraftsensoren (42) aufweist.

5. Fahrzeugbremsanlage nach Anspruch 1, **dadurch gekennzeichnet,** daß das Bremsdruckaufbauventil (26) und das Bremsdruckabsenkventil (30) als Proportionalventil ausgebildet ist.

6. Fahrzeugbremsanlage nach Anspruch 1, **dadurch gekennzeichnet,** daß der Hauptbremszylinder (10) als Tandem-Hauptbremszylinder (10) ausgebildet ist, an den zwei Bremskreise angeschlossen sind, die jeweils mindestens einen Radbremszylinder (16) aufweisen.

7. Fahrzeugbremsanlage nach Anspruch 6, **dadurch gekennzeichnet,** daß die Radbremszylinder (16) von Fahrzeugrädern einer Fahrzeugachse an einen Bremskreis. angeschlossen und über ein Ausgleichventil (36) miteinander verbunden sind.

8. Fahrzeugbremsanlage nach Anspruch 1, **dadurch gekennzeichnet,** daß die Fahrzeugbremsanlage eine Bremsschlupfregeleinrichtung (26, 30, 48, 54) aufweist.

## Claims

1. Vehicle hydraulic brake system, having an external-force service-brake system and a muscle-force auxiliary-brake system, having a brake pedal (46) and having a main brake cylinder (10), which can be actuated by means of the brake pedal (46) and to which at least one wheel brake cylinder (16) is connected via an isolating valve (14), having a hydraulic pump (18), to whose pressure side is connected a high-pressure hydraulic reservoir (24) and, via a brake-pressure increasing valve (26), the at least one wheel brake cylinder (16) and having a brake-pressure decreasing valve (30), which is connected downstream of the at least one wheel brake cylinder (16), having a control unit (54) for controlling the isolating valve (14), the brake-pressure increasing valve (26) and the brake-pressure decreasing valve (30) as a function of an actuation of the brake pedal (46), having a pedal displacement sensor (44) at least indirectly associated with the brake pedal (46) and a pedal force sensor (42) at least indirectly associated with the brake pedal (46), to which sensors the control unit (54) is connected, and having a device which, when the isolating valve (14) is closed during an external force operation, permits a preselected flexibility of the brake pedal by opening an electrically controllable valve device, characterized in that the vehicle brake system has a low-pressure hydraulic reservoir (20), to which are connected the suction side of the hydraulic pump (18) and, via the brake-pressure decreasing valve (30), the at least one wheel brake cylinder (16), in that the electrically controllable valve device of the device for the flexibility of the brake pedal (46) has a first pedal displacement valve (32; 50) and, in addition, a second pedal displacement valve (34; 52), one of the pedal displacement valves (34; 52) being arranged between the main brake cylinder (10) and the suction side of the hydraulic pump (18) and the low-pressure hydraulic reservoir (20) and the other of the pedal displacement valves (32; 50) being arranged between the main brake cylinder (10) and the pressure side of the hydraulic pump (18) and the high-pressure hydraulic reservoir (24) and in that the control unit (54) is equipped to control the two pedal displacement valves (32, 34; 50, 52) as a function of an actuation of the brake pedal (46).

2. Vehicle brake system according to Claim 1, characterized in that the pedal displacement valves are configured as proportional displacement valves (32, 34).

3. Vehicle brake system according to Claim 1, characterized in that the pedal displacement valves are configured as proportional pressure valves (50, 52).

4. Vehicle brake system according to Claim 1, characterized in that the main brake cylinder (10) has two mutually independent pedal force sensors (42).

5. Vehicle brake system according to Claim 1, characterized in that the brake-pressure increasing valve (26) and the brake-pressure decreasing valve (30) are configured as proportional valves.

6. Vehicle brake system according to Claim 1, characterized in that the main brake cylinder (10) is configured as a tandem main brake cylinder (10), to which are connected two brake circuits which each have at least one wheel brake cylinder (16).

7. Vehicle brake system according to Claim 6, characterized in that the wheel brake cylinders (16) associated with vehicle wheels of one vehicle axle are connected to one brake circuit and are connected to one another by means of an equalizing valve (36).

8. Vehicle brake system according to Claim 1, characterized in that the brake system has a skid control device (26, 30, 48, 54).

## Revendications

1. Système hydraulique de freinage de véhicule comprenant
- un système de freinage fonctionnant avec une force externe et un système auxiliaire de freinage fonctionnant avec la force musculaire,
- une pédale de frein (46) et un maître cylindre de frein (10) pouvant être actionné au moyen de la pédale de frein (46), maître cylindre de frein (10) auquel est raccordé par l'intermédiaire d'une vanne de coupure (14) au moins un cylindre de frein de roue (16),
- une pompe hydraulique (18), au côté sous pression de laquelle est raccordé un accumulateur hydraulique à haute pression (24) et par l'intermédiaire d'une vanne de mise en pression de freinage (26) au moins l'un des cylindres de freins de roues (16),
- une vanne d'abaissement de la pression de freinage (30), qui est montée en aval d'au moins l'un des cylindres (16) de freins de roues,
- un appareil de commande (54), pour commander la vanne de coupure (14), la vanne de mise en pression de freinage (26) et la vanne d'abaissement de la pression de freinage (30) en fonction d'un actionnement de la pédale de frein (46),
- un détecteur (44) de trajet de pédale associé indirectement au moins à la pédale de frein (46), et un détecteur de la force de la pédale (42) associé au moins indirectement à la pédale de frein (46), auquel est raccordé l'appareil de commande (54),
- un dispositif, qui permet quand la vanne de coupure (14) est fermée, lors d'un fonctionnement du système à l'aide d'une force externe, d'avoir une élasticité présélectionnée de la pédale de frein, en ouvrant un dispositif de vannes commandé électriquement,
caractérisé en ce que
- le système de freinage de véhicule présente un accumulateur hydraulique à basse pression (20), auquel est raccordée la pompe hydraulique (18) par le côté de son aspiration et est raccordé l'un au moins des cylindres de freins de roues (16) par l'intermédiaire de la vanne d'abaissement de la pression de freinage (30),
- le dispositif de vannes commandé électriquement du dispositif pour l'élasticité de la pédale de frein (46) comprend une première vanne de trajet de pédale (32 ; 50) et en plus une deuxième vanne de trajet de pédale (34 ; 52), l'une des vannes de trajet de pédale (34 ; 52) étant disposée entre le maître cylindre de frein (10) et le côté de l'aspiration de la pompe hydraulique (18) ou l'accumulateur hydraulique à basse pression (20), et l'autre vanne de trajet de pédale (32 ; 50) étant disposée entre le maître cylindre de frein (10) et le côté sous pression de la pompe hydraulique (18) ou l'accumulateur hydraulique à haute pression (24), et
- l'appareil de commande (54) qui sert à commander les deux vannes de trajet de pédale (32, 34 ; 50, 52) est configuré en fonction d'un actionnement de la pédale de frein (46).

2. Système de freinage de véhicule selon la revendication 1,
caractérisé en ce que
les vannes de trajet de pédale sont constituées sous la forme de vannes proportionnelles de trajet (32, 34).

3. Système de freinage de véhicule selon la revendication 1,
caractérisé en ce que
les vannes de trajet de pédale sont constituées sous la forme de vannes proportionnelles de pression (50, 52).

4. Système de freinage de véhicule selon la revendication 1,
caractérisé en ce que
le maître cylindre de frein (10) présente deux détecteurs de la force de la pédale (42) indépendants l'un de l'autre.

5. Système de freinage de véhicule selon la revendication 1,
caractérisé en ce que
la vanne de mise en pression de freinage (26) et la vanne d'abaissement de la pression de freinage (30) sont constituées sous la forme de vannes proportionnelles.

6. Système de freinage de véhicule selon la revendication 1,
caractérisé en ce que
le maître cylindre de frein (10) est constitué sous la forme d'un maître cylindre de frein (10) en tandem, auquel sont raccordés deux circuits de freinage, qui présentent respectivement au moins un cylindre de frein de roue (16)

7. Système de freinage de véhicule selon la revendication 6,
caractérisé en ce que
les cylindres de freins (16) des roues d'un essieu du véhicule sont raccordés à un circuit de freinage et sont reliés les uns aux autres par l'intermédiaire d'une vanne d'égalisation (36) .

8. Système de freinage de véhicule selon la revendication 1,
caractérisé en ce que
le système de freinage de véhicule présente un dispositif de régulation antipatinage (26, 30, 48, 54).
